# EUROPÄISCHE PATENTSCHRIFT

(11) **EP 0 852 865 B1**
(45) Veröffentlichungstag und Bekanntmachung des Hinweises auf die Patenterteilung: **27.08.2003**
(21) Anmeldenummer: 96942245.0
(22) Anmeldetag: 17.09.1996
(51) Int. Cl.: H04L 12/56

(54) **KOPPELNETZWERK FÜR KOMMUNIKATIONSEINRICHTUNGEN**
COMMUNICATION DEVICE INTERFACE
INTERFACE POUR DISPOSITIFS DE TELECOMMUNICATIONS

(30) Priorität: 29.09.1995 DE 19536522
(43) Veröffentlichungstag der Anmeldung: 15.07.1998
(73) Patentinhaber: SIEMENS AKTIENGESELLSCHAFT, 80333 München (DE)
(72) Erfinder: MARIGGIS, Athanase, D-81379 München (DE)
(86) Internationale Anmeldenummer: DE9601758
(87) Internationale Veröffentlichungsnummer: WO97012487

(56) Entgegenhaltungen:
- EP-A- 0 312 628
- EP-A- 0 549 122
- DE-A- 4 010 534
- US-A- 5 285 444
- US-A- 5 317 561
- IEEE JOURNAL ON SELECTED AREAS IN COMMUNICATIONS, Bd. 9, Nr. 8, 1.Oktober 1991, Seiten 1299-1307, XP000267581 FISCHER W ET AL: "A SCALABLE ATM SWITCHING SYSTEM ARCHITECTURE" in der Anmeldung erwähnt

## Beschreibung

Die Erfindung betrifft ein Koppelnetzwerk für Kommunikationseinrichtungen zum wahlfreien Verbinden von in eine Mehrzahl von Eingangsleitungs-Gruppen zusammengefaßten Eingangsleitungen mit zumindest einer Ausgangsleitungs-Gruppe gemäß Oberbegriff des Patentanspruches 1. Ein derartiges Koppelnetzwerk ist bereits aus "IEEE JOURNAL ON SELECTED AREAS IN COMMUNICA-TIONS", Vol. 9, No. 8, October 1991, Seiten 1299 bis 1307 bekannt. Bei diesem Koppelnetzwerk ist die jeweilige Koppelelemente-Anordnung in Trichterstruktur mehrstufig ausgebildet, um eine geradzahlige Anzahl von Eingangsleitungen wahlfrei mit einer der halben Anzahl der Eingangsleitungen entsprechenden Anzahl von Ausgangsleitungen zu verbinden. Damit ist durch die Anzahl der einzelnen Koppelelemente für die Realisierung der Trichterstruktur der jeweilige Koppelelemente-Anordnung ein relativ hoher schaltungstechnischer Aufwand erforderlich, der zuweilen unerwünscht ist.

Es ist nun Aufgabe der vorliegenden Erfindung, einen Weg zu zeigen, wie ein Koppelnetzwerk gemäß Oberbegriff des Patentanspruches 1 ausgebildet werden kann, um den schaltungstechnischen Aufwand für die Realisierung der jeweiligen Koppelelemente-Anordnung reduzieren zu können.

Gelöst wird diese Aufgabe bei einem Koppelnetzwerk gemäß Oberbegriff des Patentanspruches 1 durch die in diesem Patentanspruch angegebenen schaltungstechnischen Merkmale.

Die Erfindung bringt dabei gegenüber dem Stand der Technik beispielsweise folgende Vorteile mit sich:
- Geringere Anzahl von Koppelelementen und damit eine Kostenreduzierung für die jeweilige Koppelelemente-Anordnung,
- geringere Verlustleistung durch die Reduzierung der Anzahl der Koppelelemente,
- Einsparung von Baugruppenfläche für die Realisierung des Koppelnetzwerkes
- und geringere Signalverzögerungszeit durch die reduzierte Anzahl der innerhalb der jeweiligen Koppelelemente-Anordnung zu durchlaufenden Koppelelemente.

Vorteilhafte Ausgestaltungen des Koppelnetzwerkes gemäß der vorliegenden Erfindung ergeben sich aus den Patentansprüchen 2 bis 5.

Im folgenden wird die vorliegende Erfindung anhand von in Zeichnungen dargestellten Ausführungsbeispielen näher beschrieben.
- FIG 1: zeigt ein Koppelnetzwerk nach dem oben genannten Stand der Technik,
- FIG 2: zeigt in schematischer Form ein Koppelnetzwerk, bei welchem die vorliegende Erfindung angewandt ist,
- FIG 3: zeigt ein erstes Ausführungsbeispiel für die in FIG 2 dargestellten Koppelelemente-Anordnungen,
- FIG 4: zeigt ein zweites Ausführungsbeispiel für die in FIG 2 dargestellten Koppelelemente-Anordnungen und
- FIG 5: zeigt ein Ausführungsbeispiel für auf zwei Baugruppen verteilte Koppelelemente-Anordnungen nach FIG 2.

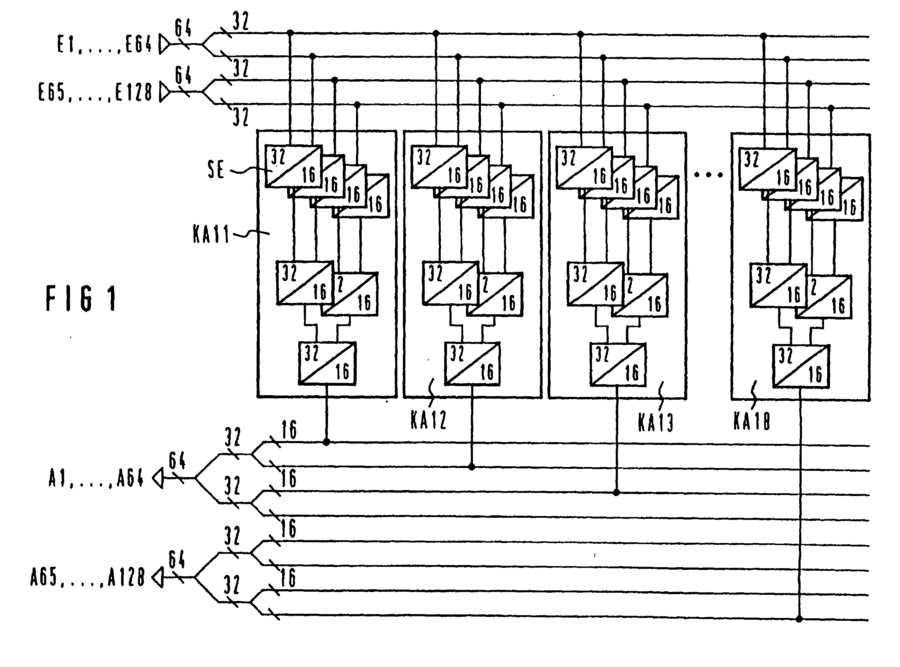

In FIG 1 ist ein Koppelnetzwerk entsprechend dem oben genannten Stand der Technik für den Fall dargestellt, daß 128 Eingangsleitungen wahlfrei mit 128 Ausgangsleitungen verbindbar sind. Die Eingansleitungen sind mit E1 bis E128, die Ausgangsleitungen dagegen mit A1 bis A128 bezeichnet. Die Eingangsleitungen und Ausgangsleitungen sind dabei in Eingangsleitungs-Gruppen bzw. Ausgangsleitungs-Gruppen mit jeweils einer festgelegten Anzahl von Eingangsleitungen bzw. Ausgangsleitungen unterteilt. Eine Eingangsleitungs-Gruppe ist hier aus 32 Eingangsleitungen, eine Ausgangsleitungs-Gruppe dagegen aus 16 Ausgangsleitungen gebildet.

Insgesamt sind bei dem angenommenen Beispiel vier Eingangsleitungs-Gruppen und 8 Ausgangsleitungs-Gruppen gebildet. Jeder der 8 Ausgangsleitungs-Gruppen ist dabei eine gesonderte Koppelelemente-Anordnung zugeordnet. Die Koppelelemente-Anordnungen, die mit KA11 bis KA18 bezeichnet sind, sind eingangsseitig parallel mit den vier Eingangsleitungs-Gruppen verbunden.

Die jeweils den gleichen Aufbau aufweisenden Koppelelemente-Anordnungen sind jeweils unter Verwendung von Koppelelementen mit 32 Eingängen und 16 Ausgängen in Trichterform mehrstufig ausgebildet. Die Koppelelemente sind mit SE bezeichnet. Eine erste Stufe weist vier Koppelelemente auf, welche jeweils mit einer der Eingangsleitungs-Gruppen verbunden sind. Daran schließt sich eine zweite Stufe an, die aus zwei Koppelelementen besteht. Deren Eingängen sind die Ausgänge der Koppelelemente der ersten Stufe zugeführt. Ausgangsseitig stehen die Koppelelemente der zweiten Stufe schließlich mit einem eine dritte Stufe bildenden Koppelelement in Verbindung. Dieses Koppelelement ist mit seinen 16 Ausgängen an eine der Ausgangsleitungs-Gruppen angeschlossen.

Das in FIG 1 dargestellte, nach dem Stand der Technik realisierte Koppelnetzwerk weist also bei dem angenommenen Beispiel pro Koppelelemente-Anordnung 7 Koppelelemente, d.h. insgesamt 56 Koppelelemente, auf.

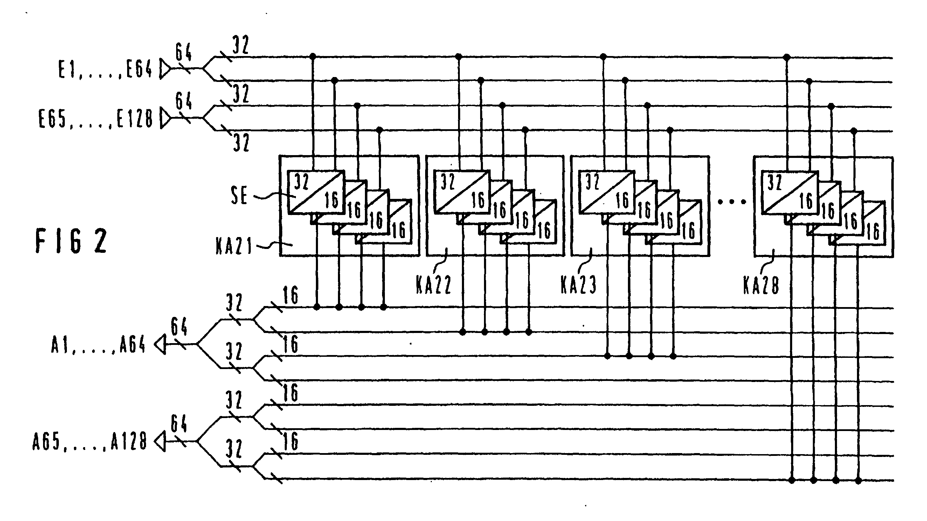

In FIG 2 ist ein Koppelnetzwerk gemäß der vorliegenden Erfindung dargestellt, welches beispielsweise in nach einem asynchronen Transfermodus ("asynchronous transfer mode" ATM) arbeitenden Kommunkationseinrichtungen, wie beispielsweise ATM-Vermittlungseinrichtungen oder ATM-"Cross Connects", einsetzbar ist, um für diesen Transfermodus festgelegte Nachrichtenzellen weiterleiten zu können. Dieses Koppelnetzwerk entspricht bis auf die Realisierung der einzelnen Koppelelemente-Anordnungen dem in FIG 1 wiedergegebenen Koppelnetzwerk. Die Koppelelemente-Anordnungen sind in FIG 2 mit KA21 bis KA28 bezeichnet. Diese Koppelelemente-Anordnungen sind jeweils lediglich einstufig ausgebildet, wobei in dieser einzigen Stufe vier Koppelelemente SE mit jeweils 32 Eingängen und 16 Ausgängen vorgesehen sind. An jedes dieser Koppelelemente ist auch hier eine der Eingangsleitungs-Gruppen angeschlossen. Die Ausgänge der Koppelelemente sind den 16 Ausgängen einer Ausgangsleitungs-Gruppe individuell zugeordnet. Dabei ist jedoch wahlweise lediglich einer der einander entsprechenden vier Ausgängen der Koppelelemente, welche ein und derselben Ausgangsleitung zugeordnet sind, durch Schaltmittel mit der betreffenden Ausgangsleitung verbindbar.

Bei dem in FIG 2 dargestellten Koppelnetzwerk sind also bei dem angenommenen Beispiel gegenüber dem in FIG 1 wiedergegebenen Koppelnetzwerk lediglich noch vier Koppelelemente pro Koppelelemente-Anordnung und somit insgesamt 32 Koppelelemente erforderlich.

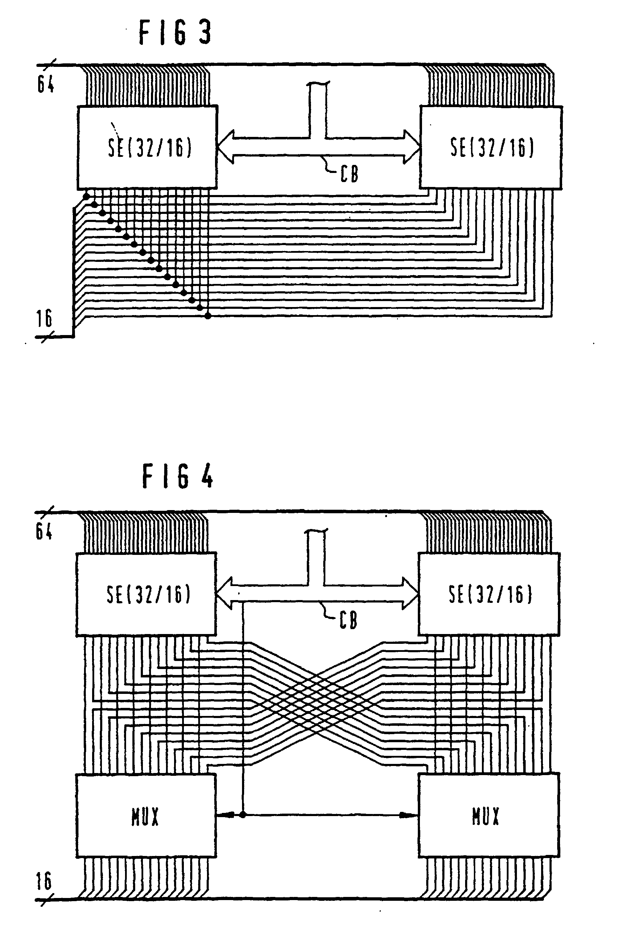

In FIG 3 ist ein erstes Ausführungsbeispiel für die Realisierung der einzelnen in FIG 2 dargestellten Koppelelemente-Anordnungen angegeben. Bei diesem Ausführungsbeispiel wird angenommen, daß 64 Eingangsleitungen wahlfrei mit 16 Ausgangsleitungen verbindbar sind. Hierfür sind zwei Koppelelemente SE mit jeweils 32 Eingangsleitungen und 16 Ausgangsleitungen vorgesehen. Dabei sind die zuvor erwähnten Schaltmittel derart ausgebildet, daß durch diese die einander entsprechenden beiden Ausgänge der Koppelelemente, welche ein und derselben Ausgangsleitung zugeordnet sind, nach Art einer "wired-or"-Verknüpfung miteinander verbunden sind. Jeder dieser beiden Ausgänge ist wahlweise in einen aktiven oder hochohmigen Zustand steuerbar, so daß zu einem bestimmten Zeitpunkt immer nur einer der beiden Ausgänge mit der in Frage kommenden Ausgangsleitung verbunden ist. Die Steuerung erfolgt dabei über einen mit den beiden Koppelelementen verbundenen Steuerbus CB. Über diesen werden die Ausgänge der Koppelelemente auch so gesteuert, daß diese bitsynchron arbeiten. Die Umschaltung der über die Schaltmittel miteinander verbundenen Ausgänge der Koppelelemente kann dabei beispielsweise nach der Übertragung einer Nachrichtenzelle oder bei Auftreten einer sogenannten Leerzelle erfolgen, wenn in den an die jeweilige Ausgangsleitung weiterzuleitenden Zellenstrom periodisch wiederholt Leerzellen eingefügt sind. Unabhängig von der speziellen Art der Umschaltung kann deren Reihenfolge und damit die Reihenfolge für die Abgabe einer Nachrichtenzelle durch das jeweilige Koppelelement mit Hilfe von über den Steuerbus CB übertragenen Steuersignalen festgelegt werden. Beispielsweise können diese Steuersignale Sendebefehle sein, die zyklisch an die Koppelelemente abgegeben werden.

In FIG 4 ist ein weiteres Ausführungsbeispiel für die Realisierung der einzelnen in FIG 2 dargestellten Koppelelemente-Anordnungen angegeben. Dieses entspricht im wesentlichen dem zuvor anhand der FIG 3 beschriebenen Ausführungsbeispiel. Ein Unterschied besteht lediglich in der Ausgestaltung der Schaltmittel für die Anschaltung der einander entsprechenden Ausgänge der Koppelelemente SE an eine in Frage kommende Ausgangsleitung. Während bei dem ersten Ausführungsbeispiel eine "wired-or"-Verknüpfung vorgenommen wird, ist hier vorgesehen, daß den Koppelelementen jeweils eine Multiplex-Einrichtung MUX nachgeschaltet ist. Die beiden Multiplex-Einrichtungen MUX weisen bei dem angenommenen Beispiel acht gesonderte Eingangs-Paare auf, welchen jeweils individuell ein mit einer der Ausgangsleitungen verbundener Ausgang zugeordnet ist. Die Multiplex-Einrichtungen besitzen also jeweils eine 8X2:1-Struktur. An ein Eingangs-Paar sind dabei die beiden einander entsprechenden, ein und derselben Ausgangsleitung zugeordneten Ausgänge der Koppelelemente SE angeschlossen, wobei die Multiplex-Einrichtungen so über den Steuerbus CB steuerbar sind, daß von einem Eingangs-Paar zu jedem Zeitpunkt immer nur ein Eingang mit der zugehörigen Ausgangsleitung verbunden ist. Die Reihenfolge der Umschaltung kann dabei wie bei dem ersten Ausführungsbeispiel durch über den Steuerbus übertragene Steuersignale erfolgen. Das in FIG 4 dargestellte Ausführungsbeispiel kann im übrigen bei dem angenommenen Beispiel auch derart modifiziert sein, daß anstelle von den Koppelelementen individuell zugeordneten Multiplex-Einrichtungen lediglich eine solche Multiplex-Einrichtung benutzt wird, welche bei dem Beispiel über 16 Eingangs-Paare verfügt, welchen jeweils ein Ausgang individuell zugeordnet ist. Diese Multiplex-Einrichtung weist also eine 16X2:1-Struktur auf.

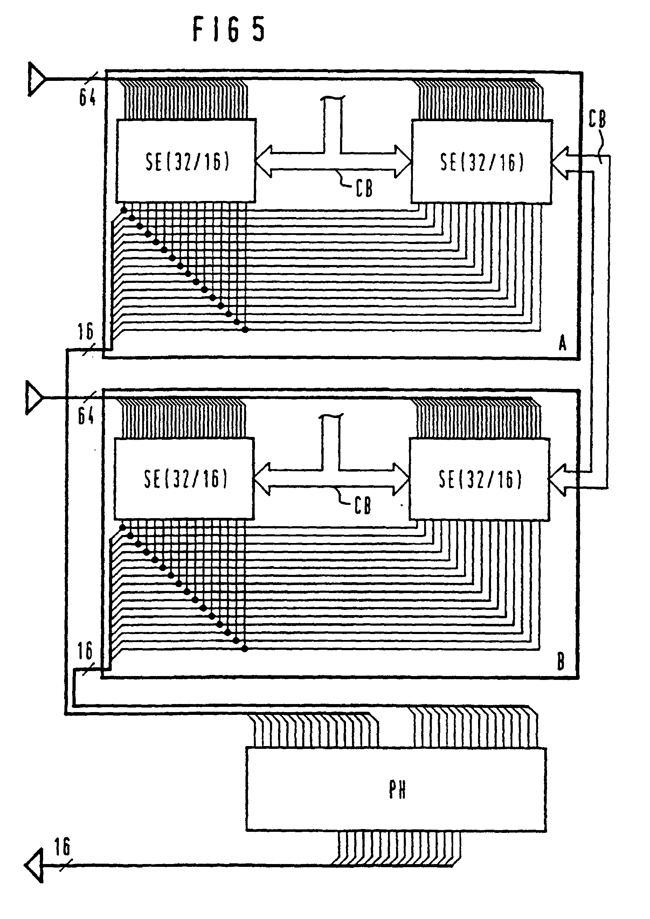

In FIG 5 ist schließlich noch der Fall dargestellt, daß mit einer Koppelelemente-Anordnung 128 Eingangsleitungen wahlfrei mit 16 Ausgangsleitungen verbindbar sind. Von den dafür erforderlichen vier Koppelelementen SE mögen dabei zwei auf einer Baugruppe A, die verbleibenden zwei Koppelelemente dagegen auf einer Baugruppe B untergebracht sein. Die Ausgänge der beiden auf einer Baugruppe vorhandenen Koppelelemente sind dabei mit Schaltmitteln nach einem der vorstehend erläuterten Ausführungsbeispiele versehen. Da durch diese getrennte Unterbringung der Koppelelemente und damit durch unterschiedliche Leitungslängen Laufzeitunterschiede bei der Übertragung von Nachrichtenzellen auftreten können, sind die Ausgänge der beiden Baugruppen (16 pro Baugruppe) mit einer Phasenanpassungs-Einrichtung PH verbunden, welche ausgangsseitig an die 16 Ausgangsleitungen angeschlossen ist. Durch diese Phasenanpassungs-Einrichtung werden dabei die genannten Laufzeitunterschiede ausgeglichen. Für den Fall, daß die Schaltmittel nach dem zweiten Ausführungsbeispiel als Multiplex-Einrichtungen ausgebildet sind, kann die Phasenanpassung auch durch diese Multiple-Einrichtungen durchgeführt werden.

Abschließend sei noch darauf hingewiesen, daß die zuvor anhand der Figuren 2 bis 5 erläuterten Koppelelemente-Anordnungen lediglich zweckmäßige Ausgestaltungen darstellen. Beispielsweise können die in den Koppelelemente-Anordnungen jeweils enthaltenen Koppelelemente auch hinsichlich der Anzahl der Eingänge und Ausgänge modifiziert sein. Im übrigen kann der interne Aufbau der einzelnen Koppelelemente beispielsweise auf einer Struktur basieren, wie sie in der eingangs zitierten Druckschrift angegeben ist. Dabei sind lediglich mit den Ausgängen des jeweiligen Koppelelementes Schaltmittel entsprechend einem der vorstehend erläuterten Ausführungsbeispiele zu verbinden.

Darüber hinaus sei auch noch darauf hingewiesen, daß das vorstehend erläuterte Koppelnetzwerk nicht nur in ATM-Kommunikationseinrichtungen verwendbar, sondern auch allgemein in Kommunikationseinrichtungen einsetzbar ist, welche für ein von dem erwähnten asynchronen Transfermodus abweichendes Übertragungsprinzip ausgelegt sind.

## Patentansprüche

1. Koppelnetzwerk für Kommunikationseinrichtungen zum wahlfreien Verbinden von in eine Mehrzahl von Eingangsleitungs-Gruppen zusammengefaßten Eingangsleitungen (E1,...,E128) mit zumindest einer Ausgangsleitungs-Gruppe (A1,...,A16), wobei einerseits jede der Eingangsleitungs-Gruppen mit einem gesonderten Koppelelement (SE) zumindest einer Koppelelemente-Anordnung (z.B. KA21) mit Trichterstruktur verbundenen ist und andererseits die jeweilige Koppelelemente-Anordnung über eine der Anzahl der zu der jeweiligen Ausgangsleitungs-Gruppe gehörenden Ausgangsleitungen entsprechende Anzahl von Ausgängen verfügt und jeder dieser Ausgänge mit einer der zu der jeweiligen Ausgangsleitungs-Gruppe gehörenden Ausgangsleitungen in Verbindung steht,
**dadurch gekennzeichnet,**
**daß** die jeweilige Koppelelemente-Anordnung (KA21) lediglich aus den mit den Eingangsleitungs-Gruppen verbundenen Koppelelementen (SE) gebildet ist,
und **daß** die Koppelelemente jeweils über Ausgänge verfügen, die den zu der jeweiligen Ausgangsleitungs-Gruppe gehörenden Ausgangsleitungen individuell zugeordnet sind, und dabei wahlweise lediglich einer der einander entsprechenden Ausgängen dieser Koppelelemente durch Schaltmittel mit der in Frage kommenden Ausgangsleitung der jeweiligen Ausgangsleitungs-Gruppe verbindbar ist.

2. Koppelnetzwerk nach Anspruch 1,
**dadurch gekennzeichnet,**
**daß** die Schaltmittel derart ausgebildet sind, daß durch diese die einander entsprechenden Ausgänge der Koppelelemente nach Art einer "wired-or"-Verknüpfung miteinander verbunden sind und dabei jeder dieser Ausgänge wahlweise in einen aktiven oder hochohmigen Zustand steuerbar ist.

3. Koppelnetzwerk nach Anspruch 1,
**dadurch gekennzeichnet,**
**daß** die Schaltmittel als Multiplex-Einrichtung (MUX) ausgebildet sind, welcher eingangsseitig die einander entsprechenden Ausgänge der Koppelelemente zugeführt sind und durch welche wahlweise einer dieser Ausgänge mit der in Frage kommenden Ausgangsleitung verbindbar ist.

4. Koppelnetzwerk nach einem der Anspruch 1 bis 3,
**dadurch gekennzeichnet,**
**daß** die Schaltmittel weiter derart ausgebildet sind, daß durch diese Signallaufzeit-Unterschiede an den einander entsprechenden Ausgängen der Koppelelemente ausgeglichen werden.

5. Koppelnetzwerk nach einem der Ansprüche 1 bis 4,
**dadurch gekennzeichnet,**
**daß** eine Mehrzahl von Ausgangsleitungs-Gruppen vorgesehen ist,
**daß** jeder der Ausgangsleitungs-Gruppen eine gesonderte Koppelelemente-Anordnung zugeordnet ist
und **daß** die Eingangsleitungs-Gruppen jeweils parallel an für diese in Frage kommende, einander entsprechende Koppelelemente der Koppelelemente-Anordnungen herangeführt sind.

## Claims

1. Switching network for communication devices for the freely selectable connecting of input lines (E1,...,E128) combined into a plurality of input-line groups to at least one output-line group (A1,...,A16), on the one hand each of the input-line groups being connected to a separate switching element (SE) of at least one arrangement of switching elements (for example KA21) having a funnel structure and on the other hand the respective arrangement of switching elements having a number of outputs corresponding to the number of output lines belonging to the respective output-line group and each of these outputs being in connection with one of the output lines belonging to the respective output-line group, **characterized in that** the respective arrangement of switching elements (KA21) is formed only by the switching elements (SE) connected to the input-line groups, and **in that** the switching elements in each case have outputs which are individually assigned to the output lines belonging to the respective output-line group, and in this case only one of the mutually corresponding outputs of these switching elements can be connected, according to choice, to the relevant output line of the respective output-line group by switching means.

2. Switching network according to Claim 1, **characterized in that** the switching means are of such a form that the mutually corresponding outputs of the switching elements are connected to each other by the said switching means in the manner of a "wired-or" operation and in this case each of these outputs can be controlled, according to choice, to assume an active or high-impedence state.

3. Switching network according to Claim 1, **characterized in that** the switching means are in the form of a multiplexing device (MUX) to which on the input side the mutually corresponding outputs of the switching elements are led and by which one of these outputs can be connected, according to choice, to the relevant output line.

4. Switching network according to one of Claims 1 to 3, **characterized in that** the switching means are further of such a form that differences in signal delay at the mutually corresponding outputs of the switching elements are compensated by the said switching means.

5. Switching network according to one of Claims 1 to 4, **characterized in that** a plurality of output-line groups are provided, **in that** each of the output-line groups is assigned a separate arrangement of switching elements and **in that** the input-line groups are in each case led in parallel to mutually corresponding switching elements of the arrangement of switching elements relevant for the said groups.

## Revendications

1. Réseau de connexion pour dispositifs de communication en vue de la liaison sélective de lignes d'entrée (E1 à E128) regroupées dans une pluralité de groupes de lignes d'entrée à au moins un groupe de lignes de sortie (A1 à A16), dans lequel d'une part chacun des groupes de lignes d'entrée est relié à un élément de connexion particulier (SE) d'au moins un dispositif à éléments de connexion (par exemple KA21) selon une structure en entonnoir et d'autre part le dispositif à éléments de connexion respectif dispose d'un nombre de sorties correspondant au nombre des lignes de sortie appartenant au groupe de lignes de sortie respectif et chacune de ces sorties est en liaison avec l'une des lignes de sortie appartenant au groupe de lignes de sortie respectif,
**caractérisé par le fait que**
le dispositif à éléments de connexion (KA21) respectif est formé simplement à partir des éléments de connexion (SE) reliés aux groupes de lignes d'entrée,
et que les éléments de connexion disposent à chaque fois de sorties qui sont associées individuellement aux lignes de sortie appartenant au groupe de lignes de sortie respectif, seule l'une des sorties se correspondant de ces éléments de connexion pouvant alors être reliée sélectivement par des moyens de commutation à la ligne de sortie envisagée du groupe de lignes de sortie respectif.

2. Réseau de connexion selon la revendication 1,
**caractérisé par le fait que** les moyens de commutation sont conçus de telle sorte que, par ceux-ci, les sorties se correspondant des éléments de connexion sont reliées entre elles selon une combinaison "ou-câblé" et chacune de ces sorties peut alors être commandée sélectivement pour être mise dans un état actif ou à haute impédance.

3. Réseau de connexion selon la revendication 1,
**caractérisé par le fait que** les moyens de commutation sont conçus sous forme de multiplexeur (MUX) auquel sont envoyées en entrée les sorties se correspondant des éléments de connexion et par lequel l'une de ces sorties peut être reliée sélectivement à la ligne de sortie envisagée.

4. Réseau de connexion selon l'une des revendications 1 à 3,
**caractérisé par le fait que** les moyens de commutation sont conçus de manière à compenser des différences de temps de propagation aux sorties se correspondant des éléments de connexion.

5. Réseau de connexion selon l'une des revendications 1 à 4,
**caractérisé par le fait que**
il est prévu une multiplicité de groupes de lignes de sortie
un dispositif à éléments de connexion particulier est associé à chacun des groupes de lignes de sortie
et les groupes de lignes d'entrée sont amenés à chaque fois en parallèle à des éléments de connexion, envisagés pour ceux-ci et se correspondant, des dispositifs à éléments de connexion.
